# EUROPÄISCHE PATENTANMELDUNG

(11) **EP 1 031 763 A2**
(43) Veröffentlichungstag der Anmeldung: **30.08.2000**
(21) Anmeldenummer: 00102137.7
(22) Anmeldetag: 07.02.2000
(51) Int. Cl.: F16H 15/52

(54) **Planetengetriebe**

(30) Priorität: 23.02.1999 DE 19907637
(71) Anmelder: CLARK EQUIPMENT BELGIUM N.V., B-8200 Brugge (BE)
(72) Erfinder: De Mazière, Filip, 9070 Destelbergen (BE)
(74) Vertreter: Patentanwälte Rehberg + Hüppe

(57) **Zusammenfassung**

Ein Planetengetriebe (1) ist mit einem Gehäuse (5), einem Sonnenrad (4) und mindestens zwei Planetenrädern (11) versehen, die auf einem Planetenradträger (17) frei drehbar gelagert sind und deren Achsen (13) in radialer Richtung zu einer gemeinsamen Mittelachse (8) des Planetengetriebes (1) fluchtend angeordnet sind. Das Gehäuse (5) und das Sonnenrad (4) weisen entlang der Mittelachse (8) unterschiedliche Durchmesser und somit kegelförmige Mantellinien (6, 7) auf. Sämtliche Planetenräder (11) sind zur Änderung der Übersetzung unter Last gemeinsam in Richtung ihrer Achsen (13) verschiebbar und das Gehäuse (5), die Planetenräder (11) und das Sonnenrad (4) sind in Richtung der Mittelachse (8) gegeneinander angepreßt angeordnet. Sie wälzen sich unter Reibschluß aneinander ab. Als Planetenräder sind Planetenradpaare (10) aus einem inneren Planetenrad (11) und einem äußeren Planetenrad (12) mit ihren Achsen (13, 14) vorgesehen. Die Achsen (13, 14) der beiden Planetenräder (11, 12) jedes Planetenradpaares (10) sind in radialer Richtung zu der Mittelachse (8) des Planetengetriebes (1) fluchtend angeordnet. Die beiden Planetenräder (11, 12) jedes Planetenradpaares (10) sind um eine sich radial zu der Mantellinie (6) des Sonnenrades (4) erstreckende Schwenkachse (41) verschwenkbar angeordnet und somit schräg zu den Mantellinien (7, 6) des Gehäuses (5) und des Sonnenrades (4) verstellbar.

## Beschreibung

Die Erfindung betrifft ein Planetengetriebe mit den im Oberbegriff des Anspruchs 1 angegebenen Merkmalen. Solche Planetenradgetriebe werden manchmal auch als Umlaufgetriebe bezeichnet. Sie besitzen ein meist stillstehend angeordnetes Gehäuse, ein sich drehendes Sonnenrad und eine Mehrzahl von Planetenrädern, die auf einem Planetenradträger drehbar gelagert sind. Es wird beispielsweise der Planetenradträger eingangsseitig angetrieben, während eine Ausgangswelle mit dem Sonnenrad verbunden ist oder umgekehrt. Solche Planetengetriebe werden vorzugsweise in Lastkraftwagen eingesetzt, können aber auch an anderer Stelle verwendet werden.

Planetengetriebe der beschriebenen Art sind bekannt. Die wesentlichen Elemente sind ein stillstehend angeordnetes Gehäuse, ein Sonnenrad und mehrere planetenräder in der Regel sind drei Planetenräder über den Umfang des Sonnenrades verteilt angeordnet. Die Planetenräder, das Sonnenrad und die entsprechende Innenfläche des Gehäuses sind als Zahnräder ausgebildet, so daß sich die Planetenräder unter Formschluß abwälzen. Der Antrieb kann über den Planetenradträger erfolgen oder auch am Sonnenrad, je nach dem, welche feste Übersetzung eines solchen Planetengetriebes genutzt wird. Der wesentliche Nachteil eines solchen bekannten Planetengetriebes besteht in der festen Übersetzung, d. h. es ist nicht möglich, mit diesem Getriebe eine variable Übersetzung zu erreichen. Wirkungsgrad solcher Planetengetriebe ist dagegen gut, so daß ihr Einsatz überall dort angezeigt ist, wo eine feste Übersetzung erforderlich ist. Die Räder des Planetenradgetriebes können mit Stirnverzahnung oder auch mit Schrägverzahnung ausgebildet sein. Bei Anwendung einer Schrägverzahnung sind gesonderte Stützlager für die Elemente erforderlich, die die nicht unerheblichen Kräfte aufnehmen können. Solche bekannten Planetengetriebe können weiterhin nur lastfrei ein- bzw. ausgerückt werden, wenn mehrere Planetengetriebeelemente hintereinander geschaltet sind und wahlweise zur Kraftübertragung herangezogen werden.

Die DE-PS 177 073 zeigt ein Planetengetriebe mit einem Gehäuse, einem Sonnenrad und drei Planetenrädern, die auf einem Planetenradträger frei drehbar gelagert sind. Der Planetenradträger weist Achsen für die drehbare Lagerung der Planetenräder auf. Diese Achsen erstrecken sich fluchtend bzw. parallel zu den Mantellinien eines Sonnenrades und eines Gehäuses, bzw. sind in einer gemeinsamen Ebene angeordnet. Das Gehäuse und das Sonnenrad sind mit gerade verlaufenden Mantellinien, in Schrägstellung zu der gemeinsamen Mittelachse vorgesehen, so daß sowohl das Sonnenrad wie auch das Gehäuse kegelförmig ausgebildet sind. Sämtliche Planetenräder sind über einen gemeinsamen Antrieb zur Änderung der Übersetzung unter Last gemeinsam in Richtung ihrer Achsen verschiebbar. Der Planetenradträger ist mit seinen Achsen ortsfest angeordnet. Das Gehäuse, die Planetenräder und das Sonnenrad wälzen sich unter Reibschluß aneinander ab, wobei der Reibschluß durch eine Feder erreicht wird, mit deren Hilfe das Sonnenrad, die Planetenräder und das Gehäuse aneinandergepreßt gehalten werden. Damit wird ein Reibrad-Wechselgetriebe aufgezeigt, bei dem eine Änderung der Übersetzung dadurch herbeigeführt wird, daß die Planetenräder entlang der feststehenden Achse des Planetenradträgers in Richtung der Mantellinien des Sonnenrades und des Gehäuses verschoben werden. Die Verschieberichtung ist auf eine parallele Richtung zu den Mantellinien des Sonnenrades und des Gehäuses festgelegt. Die Verschiebung erfolgt unter Überwindung des Reibschlusses.

Aus der EP 0 507 431 A1 ist ein Planetenradgetriebe in Form eines Reibradgetriebes bekannt, welches zwei wahlweise nutzbare Übersetzungsstufen aufweist. Es ist ein Gehäuse und ein Sonnenrad vorgesehen, die mit einer Eingangswelle bzw. Ausgangswelle drehfest in Verbindung stehen. Auf der Ausgangswelle ist in Form einer Nabe ein Planetenradträger drehbar gelagert. Zwischen dem Planetenradträger und der Ausgangswelle ist eine Überholkupplung vorgesehen. Der Planetenradträger dient zur Lagerung von äußeren und inneren Planetenrädern, die unter Reibkontakt aneinander anliegen. Die inneren Planetenräder sind in Form von Anstellrädern federnd abgestützt, um den Reibschluß aufrechtzuerhalten. Sonnenrad, Gehäuse und Planetenräder sind in zylindrischer Bauweise verwirklicht und angeordnet, so daß auch die Mantellinien zylindrisch ausgerichtet sind. Die Achsen der Planetenräder liegen in einer gemeinsamen Ebene, die die gemeinsame Mittellinie des Planetenradgetriebes nicht schneidet, damit die Anpressung der Planetenräder und der Reibschluß aufrechterhalten werden können. Die Verwendung von äußeren und inneren Planetenrädern, die miteinander im Reibkontakt stehen, erbringt eine Drehrichtungsumkehr, so daß die Eingangs- und die Ausgangswelle im gleichen Drehsinn angetrieben werden.

Der Erfindung liegt die Aufgabe zugrunde, ein Planetengetriebe der im Oberbegriff des Anspruchs 1 beschriebenen Art bereitzustellen, das zur stufenlosen Änderung der Übersetzung unter Last besser schaltbar ist.

Erfindungsgemäß wird dies durch ein Planetengetriebe der eingangs beschriebenen Art dadurch erreicht, daß als Planetenräder Planetenradpaare aus einem inneren Planetenrad und einem äußeren Planetenrad mit ihren Achsen vorgesehen sind, daß die Achsen der beiden Planetenräder jedes Planetenradpaares in radialer Richtung zu der Mittelachse des Planetengetriebes fluchtend angeordnet sind, und daß die beiden Planetenräder jedes Planetenradpaares um eine sich radial zu der Mantellinie des Sonnenrades erstreckende Schwenkachse verschwenkbar angeordnet und somit schräg zu den Mantellinien des Gehäuses und des Sonnenrades verstellbar sind.

Die Erfindung geht grundlegend von dem Gedanken aus, das Planetengetriebe im wesentlichen in Kegelform oder in konischer Ausbildung mit gemeinsamer Mittelachse weiterzubilden. Die Kegelform kann grundsätzlich gerade, also mit einer gerade verlaufenden Mantellinie des Kegels realisiert werden. Es ist aber auch möglich, nur eine kegelartige Form zu verwirklichen, bei der die Mantellinien des Sonnenrades und des Gehäuses zwar parallel zueinander, jedoch gekrümmt verlaufen. Durch diese Kegelform ist die Voraussetzung dafür geschaffen, daß die Planetenräder an unterschiedlichen Stellen in Richtung der Mittelachse zwischen das Gehäuse und das Sonnenrad eingeschaltet sein können. Von besonderer Bedeutung ist es, daß nicht einzelne Planetenräder, wie bekannt, sondern immer Planetenradpaare eingesetzt werden. In der Regel werden damit drei Planetenradpaare über den Umfang zwischen Sonnenrad und Gehäuse verteilt eingesetzt. Die Achsen der beiden Planetenräder jedes Planetenradpaares sind in radialer Richtung fluchtend angeordnet, und zwar in radialer Richtung zu der Mittelachse des Planetengetriebes. Zwischen dem inneren Umfang des Gehäuses und dem äußeren Umfang des Sonnenrades sind damit an jeder Stelle gleichsam zwei Planetenräder vorgesehen. Die beiden Planetenräder jedes Planetenradpaares sind kippsicher gelagert und geführt. Sämtliche Planetenradpaare werden gemeinsam entlang des äußeren Umfangs des Sonnenrades, und zwar schräg zur Mantellinie des Sonnenrades, verstellt, wenn die Übersetzung geändert wird. In den Zeiten, in denen das Getriebe mit unveränderter Übersetzung betrieben wird, ändert sich die Relativlage der Planetenradpaare in Richtung der Mantellinien bzw. der Mittelachse nicht. Bei einem solchen Planetengetriebe kann beispielsweise der Planetenradträger als Eingang des Getriebes genutzt werden, während der Ausgang des Getriebes über das sich drehende Sonnenrad abgegriffen wird. Zur Realisierung des Gehäuses, der Planetenräder und des Sonnenrades dürfen keine Zahnräder verwendet werden, sondern die Elemente müssen reibschlüssig ausgebildet werden, so daß sie sich unter Reibschluß aneinander abwälzen können und andererseits auch die axiale Verstellung zum Zwecke der Änderung der Übersetzung möglich wird. Wesentlich ist in diesem Zusammenhang, daß die beiden Planetenräder jedes Planetenradpaares um eine sich radial zu der Mantellinie des Sonnenrades erstreckenden Schwenkachse verschwenkbar angeordnet sind und somit die Möglichkeit besteht, die beiden Planetenräder jedes Planetenradpaares in eine Schrägstellung zu den Mantellinien des Gehäuses und des Sonnenrades zu verbringen, also so zu verstellen, daß damit eine Änderung der Übersetzung eingeleitet und herbeigeführt werden kann. Die beiden Planetenräder jedes Planetenradpaares sind dabei kippsicher gelagert bzw. aufgenommen, d. h. ihre Achse ist immer geführt und kann relativ zur Mittelachse des Planetengetriebes keine Kippbewegung ausführen. Hierin liegt es auch begründet, daß bei dem neuen Planetengetriebe Planetenräder in Einzelanordnung nicht eingesetzt werden können, sondern es immer erforderlich ist, Planetenradpaare zu bilden, die über den Umfang des Sonnenrades verteilt angeordnet werden.

Der wesentliche Vorteil des neuen Getriebes besteht darin, daß die Übersetzung während des Betriebes des Getriebes verändert werden kann, und dies noch unter Last. Damit läßt sich ein solches Getriebe mit besonderem Vorteil bei Baumaschinen, Erdbearbeitungsmaschinen u. dgl. einsetzen. Das Planetengetriebe ist im Fahrantrieb vorgesehen, bei dem es darauf ankommt, einen möglichst großen Überdeckungsbereich abzudecken, wie er durch das relativ langsame Fahren unter Arbeitsbedingungen einerseits und durch das relativ schnelle Fahren, beispielsweise auf Transportstraßen, vorgegeben ist. Das neue Getriebe weist einen sehr großen Bereich auf, innerhalb dessen das Übersetzungsverhältnis verändert werden kann. Es ergibt sich der weitere Vorteil, daß die Antriebsmaschine des Fahrzeugs dadurch immer in einem optimalen Bereich arbeiten kann und der Kraftstoffverbrauch vergleichsweise reduziert ist. Das neue Getriebe ermöglicht es auch durch eine besondere Anordnung, die verwendeten Lager frei von solchen Kräften zu halten, die durch den Reibschluß initiiert sind. Auch die eingesetzten Achselemente werden durch keine Normalkräfte beansprucht. Von besonderer Bedeutung ist auch die Wahl des Kegelwinkels. Wenn der Kegelwinkel sehr groß gewählt wird, resultiert eine kurze Baulänge des Getriebes, und der nutzbare Überdeckungsbereich ist vergleichsweise groß. Andererseits können aber die Planetenräder nicht unendlich dünn gestaltet werden, so daß bei diesem Reibschluß Gleitreibung entsteht, die den Wirkungsgrad des Getriebes vermindert. Bei einem kleinen Keilwinkel verkleinert sich vorteilhaft die Verlustreibung, jedoch vergrößert sich in nachteiliger Weise die Baulänge. Besonders sinnvoll ist es, die besondere Ausbildung und Anordnung nicht nur in einer, sondern in zwei Stufen vorzunehmen, die gegensinnig gegeneinander angeordnet sind. Es entstehen dann zwei Übersetzungsstufen hintereinander, wobei sich deren Übersetzungsverhältnisse multiplizieren. Es können beide Übersetzungsstufen mit variablem Übersetzungsverhältnis ausgebildet werden. In vielen Fällen reicht es aber aus, wenn eine dieser Stufen ein variables Übersetzungsverhältnis und die andere Stufe ein festes Übersetzungsverhältnis besitzt. Das neue Planetengetriebe hat den weiteren Vorteil, daß das Sonnenrad an seiner kegelförmigen Spitze einen sehr kleinen Durchmesser bekommen kann. Das sonnenrad muß an dieser Stelle nicht in einem Lager geführt werden. Infolge der dort herrschenden großen Drehzahlen des Sonnenrades ist das übertragbare Moment klein. Im Fußbereich der Kegelform des Sonnenrades herrschen die umgekehrten Verhältnisse. Damit kann das Planetengetriebe sehr kompakt konstruiert werden. Ein weiterer wesentlicher Vorteil des neuen Planetengetriebes besteht darin, daß die Verwendung eines Wandlers, wie er bei einem Keilriemengetriebe und auch bei einem Toroidgetriebe unerläßlich ist, in Fortfall kommt. Dies liegt daran, daß der nutzbare Überdeckungsbereich vergleichsweise sehr viel größer ist. Der nutzbare Überdeckungsbereich des neuen Planetengetriebes ist beispielsweise etwa 4-fach größer als bei Toroid-Halb-getrieben. Weiterhin ist der erzielbare Wirkungsgrad von dem gewählten Kegelwinkel abhängig. Zum Zwecke des Anfahrens genügt die Einschaltung einer Kupplung, die zweckmäßigerweise im Antriebsstrang hinter dem Getriebe angeordnet werden sollte. Der mit dem neuen Getriebe erzielbare Wirkungsgrad liegt in der Größenordnung von 95-98 % und damit weit oberhalb des Wirkungsgrades von Keilriemengetrieben und Toroidgetrieben. Das neue Planetengetriebe erlaubt auch eine Doppelanordnung hintereinander. Während eine solche Doppelanordnung bei Toroidgetrieben jedoch nur dazu führt, daß spezielle Drucklager eingespart werden und sich das Übersetzungsverhältnis im Vergleich zur Einzelanordnung nicht ändert, tritt bei dem neuen Planetengetriebe bei einer solchen Doppelanordnung der Vorteil ein, daß sich die beiden Übersetzungsverhältnisse der beiden Stufen multiplizieren.

Die beiden Planetenräder jedes Planetenradpaares können auf einem Käfig frei drehbar gelagert sein. Der Käfig ist in Richtung der Mantellinien des Gehäuses und des Sonnenrades verschiebbar geführt. Durch die Verschiebung des Käfigs bzw. der Planetenradpaare wird das Übersetzungsverhältnis geändert, weil die Planetenradpaare mit anderen Umfangsstellen des Sonnenrades und des Gehäuses zusammenarbeiten, also mit anderen Durchmessern. Das jeweilige Übersetzungsverhältnis wird durch diese Durchmesser zueinander bestimmt. Der Spalt zwischen der äußeren Oberfläche des Sonnenrades und der inneren Oberfläche des Gehäuses ist in der Regel gleich breit. Damit sind die Planetenräder nach Art von Stirnrädern ausgebildet, nicht dagegen nach Art von Kegelrädern. Es gibt aber auch die Möglichkeit, diesen Ringspalt zwischen der Oberfläche des Sonnenrades und der inneren Oberfläche des Gehäuses in axialer Richtung variabel zu gestalten, insbesondere derart, daß sich sämtliche Flächen in einem Punkt auf der Mittellinie schneiden. In diesem Falle werden die Planetenräder wie Kegelräder ausgebildet. Wenn die betreffende Übersetzungsstufe ein festes Übersetzungsverhältnis haben soll, entfällt die axiale Verschiebbarkeit der Planetenräder an dieser Stelle. Durch diese Lösung werden Gleitverluste, hervorgerufen durch untershiedliche Umfangsgeschwindigkeiten an den jeweiligen Kontaktstellen, gänzlich eliminiert. Es muß dann aber auch die axiale Relativlage zwischen Sonnenrad und Gehäuse jeweils angepaßt werden.

Die beiden Planetenräder jedes Planetenradpaares können relativ zu dem Käfig um die sich radial zu der Mantellinie des Sonnenrades erstreckende Schwenkachse über ein Lenkgestänge verschwenkbar angeordnet sind. Das Lenkgestänge ermöglicht eine leichte Verstellung.

In einer besonderen Ausführungsform kann der die beiden Planetenräder jedes Planetenradpaares aufnehmende Käfig auf mindestens einer Führungsachse in Richtung der Mantellinie des Sonnenrades geführt sein. Die Führungsachse kann, wie einleitend bereits angedeutet wurde, gerade oder gekrümmt ausgebildet sein. Die Form stimmt mit der Form der Mantellinie überein, die das Sonnenrad erzeugt. Die Planetenräder aller Planetenradpaare können zweckmäßig über einen willkürlich steuerbaren Antrieb verschiebbar sein. Mit diesem willkürlich steuerbaren Antrieb kann eine Änderung des Übersetzungsverhältnisses jederzeit erfolgen, gleichgültig, ob das Planetengetriebe unter Last steht oder nicht. Für die Änderung des Übersetzungsverhältnisses ist allerdings die Bewegung des Planetengetriebes Voraussetzung. Für die Realisierung des steuerbaren Antriebes ergeben sich verschiedene Möglichkeiten. Der Antrieb kann beispielsweise mechanisch, pneumatisch oder hydraulisch realisiert werden. Auch elektromagnetische Ausführungsformen sind denkbar.

Die kegelförmigen Mantellinien können gerade oder gekrümmt verlaufend ausgebildet sein. Die besonderen Vorteile eines gekrümmten Verlaufes werden noch beschrieben.

Eine besonders vorteilhafte Ausführungsform besteht darin, daß der die beiden Planetenräder jedes Planetenradpaares aufnehmende Käfig auf einer Führungsachse und einer dazu parallel angeordneten Verstellachse in Richtung der Mantellinie des Sonnenrades geführt ist, daß die Verstellachse ein Außengewinde aufweist, auf dem eine Verstellmutter angeordnet ist, die mit dem Lenkgestänge in Verbindung steht, und daß für die Verstellung der Planetenradpaare ein Elektromotor für den Drehantrieb der Verstellachsen vorgesehen ist. Eine solche Ausbildung erbringt gleichermaßen die kippsichere Anordnung der Planetenradpaare wie auch die Möglichkeit der Veränderung ihrer Relativlage zum Sonnenrad, also die Veränderung des Übersetzungsverhältnisses. Auch der Drehantrieb der Verstellachse wird besonders einfach. Ein schwach dimensionierter Elektromotor ist hierfür völlig ausreichend.

In der Regel sind drei Planetenradpaare vorgesehen. Das Sonnenrad kann freifliegend an den drei ihm zugekehrten Planetenrädern gelagert sein. Es entfällt also vorteilhaft ein Lageraufwand für das Sonnenrad, was andererseits nicht ausschließt, daß auch Drehlager für die Anordnung des Sonnenrades vorgesehen sein können. Insbesondere ergibt sich aber auch die Möglichkeit, das Sonnenrad hohl zu gestalten, um durch diese Durchbrechung den Planetenradträger hindurchreichen zu lassen, an dem die Führungsachsen und Verstellachsen aufgenommen sind. Die Führungsachsen können umdrehbar an dem Planetenträger vorgesehen sein, beispielsweise mit ringscheibenartigen Elementen des Planetenradträgers verschweißt sein. Sofern die Verstellachsen mit Gewinde versehen sind, auf denen Verstellmuttern im Eingriff sind, müssen die Verstellachsen an dem Planetenträger drehbar gelagert sein.

Die Erfindung läßt sich bereits dann verwirklichen, wenn nur eine Übersetzungsstufe mit variabler Übersetzung vorgesehen ist. Besonders vorteilhaft wird jedoch die Anordnung, wenn das Planetengetriebe eine aus Gehäuse, Planetenradpaaren und Sonnenrad gebildete Eingangsstufe mit variabler Übersetzung und eine Ausgangsstufe mit fester Übersetzung aufweist. Natürlich ist es auch möglich, sowohl die Eingangsstufe wie auch die Ausgangsstufe mit variabler Übersetzung auszustatten. Auch dann entstehen die eingangs angedeuteten Vorteile. Die Lager der Achsen werden von solchen Kräften freigehalten, die durch den Reibschluß entstehen. Die Ausgangsstufe kann spiegelbildlich symmetrisch bzw. identisch wie die Eingangsstufe ausgebildet sein. Wenn im Bereich der Ausgangsstufe keine variable Übersetzung benötigt wird, vereinfacht sich die Ausbildung. In allen Fällen ist für die axiale Anpressung der Elemente eine Druckquelle vorgesehen. Bei gegensinniger Anordnung der Gehäuse werden die Sonnenräder der Eingangsstufe und der Ausgangsstufe von der Druckquelle auseinanderdrückt. In der einfachsten Form kann diese Druckquelle aus einer Tellerfeder, einer sonstigen Feder oder auch einem vorgespannten Luftpolster o. dgl. bestehen. Es ist auch möglich, die über die Kraftquelle ausübbare Kraft zu regeln bzw. anzupassen. Beispielsweise kann die axial wirkende Anpreßkraft, die für die Aufbringung des Reibschlusses erforderlich ist, dann reduziert werden, wenn unter Teillast gefahren wird.

Die Erfindung wird anhand bevorzugter Ausführungsbeispiele weiter erläutert und beschrieben. Es zeigen:
- Fig. 1: eine schematisierte Darstellung des Planetengetriebes mit einer Eingangsstufe mit variabler Übersetzung und einer Ausgangsstufe mit variabler Übersetzung,
- Fig. 2: eine schematisierte Schnittdarstellung gemäß der Linie II-II in Fig. 1,
- Fig. 3: eine schematisierte Seitenansicht des Planetenradträgers,
- Fig. 4: eine Stirnansicht des Planetenradträgers,
- Fig. 5: eine mehr konstruktive Darstellung des Planetengetriebes im Bereich eines Planetenradpaares,
- Fig. 6: eine Schnittdarstellung gemäß der Linie VI-VI in Fig. 5,
- Fig. 7: eine Draufsicht auf die Darstellung gemäß Fig. 6 nach der Linie VII-VII,
- Fig. 8: eine Prinzipskizze zur Verdeutlichung der Arbeitsweise des Lenkgetriebes,
- Fig. 9: eine schematisierte Stirnansicht zur Verdeutlichung der Größenverhältnisse zwischen den Planetenrädern und dein Sonnenrad an der Stelle seines kleinsten Durchmessers,
- Fig. 10: eine schematisierte Seitenansicht zur Verdeutlichung der Gleitreibung,
- Fig. 11: eine schematisierte Seitenansicht eines Planetengetriebes mit Sonnenrad und Gehäuse, die gekrümmte Mantellinien aufweisen, und
- Fig. 12: die Einzeldarstellung einer Ausgangsstufe mit fester Übersetzung ohne Gleitreibung zwischen den Planetenrädern und dem Sonnenrad sowie dem Gehäuse.

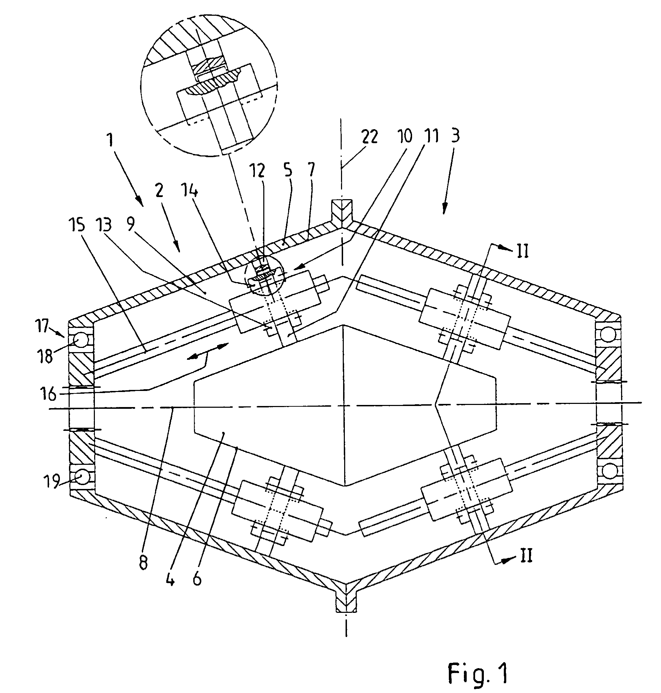

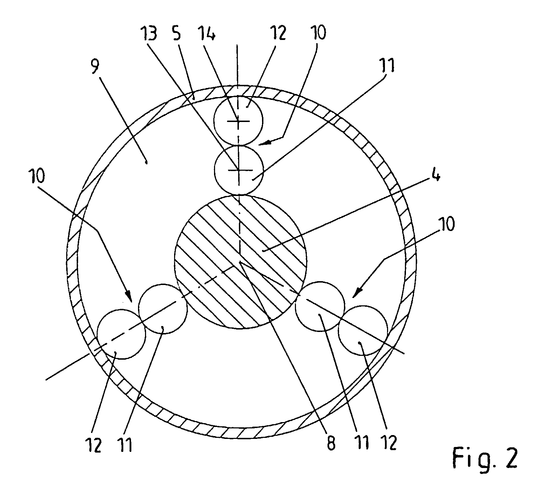

In Fig. 1 ist schematisch ein Planetengetriebe 1 angedeutet. Das Planetengetriebe 1 weist eine Eingangsstufe 2 und eine Ausgangsstufe 3 auf. Die Eingangsstufe 2 besitzt ein Sonnenrad 4 und ein Gehäuse 5. Das Sonnenrad 4 weist eine kegelförmige äußere Oberfläche auf, die durch eine Mantellinie 6 erzeugt wird. Die Mantellinie 6 erstreckt sich in der Zeichenebene der Fig. 1 und ist eine gerade verlaufende Linie, so daß das Sonnenrad 4 die Form eines exakten Kegels besitzt. Auch die innere Oberfläche des Gehäuses 5 verläuft exakt konisch und wird von einer Mantellinie 7 gebildet. Bei Drehung der Mantellinien 6 und 7 um eine gemeinsame Mittelachse 8 entstehen gedanklich die Oberflächen des Sonnenrades 4 und die innere Oberfläche des Gehäuses 5. Zwischen diesen beiden Oberflächen erstreckt sich ein Ringraum 9. In diesem Ringraum 9 sind mehrere Planetenradpaare 10 über den Umfang des Sonnenrades 4 verteilt angeordnet. Es müssen mindestens zwei Planetenradpaare 10 in einer gegenseitigen Relativlage von 180° vorgesehen sein. Besser ist es, wenn drei Planetenradpaare 10 in einem gegenseitigen Winkel von 120° über den Umfang verteilt vorgesehen sind, wie dies in Fig. 2 angedeutet ist. Die Planetenradpaare 10 sind in der aus Fig. 1 erkennbaren Schräglage zu der gemeinsamen Mittelachse 8 vorgesehen. Jedes Planetenradpaar 10 besteht aus einem inneren Planetenrad 11 und einem äußeren Planetenrad 12. Der Abstand zwischen der äußeren Oberfläche des Sonnenrades 4 und der inneren Oberfläche des Gehäuses 5 entspricht dem Doppelten eines Durchmessers eines Planetenrades 11 bzw. 12. Die beiden Planetenräder 11 und 12 besitzen gleiche Durchmesser, sind als Friktionsräder ausgebildet und berühren einander bzw. das Sonnenrad 4 und das Gehäuse 5 unter Reibschluß. Jedes Planetenrad 11 weist eine Achse 13 auf. Jedes Planetenrad 12 besitzt eine Achse 14. Die beiden Planetenräder 11 und 12 jedes Planetenradpaares 10 sind so angeordnet, daß ihre Achsen 13 und 14 radial zu der Mittelachse 8 fluchtend angeordnet sind. Besonders deutlich wird dies aus Fig. 2. Die beiden Planetenräder 11 und 12 jedes Planetenradpaares 10 sind mittels einer Führungsachse 15 kippsicher gelagert, aber frei drehbar, soweit dies die Reibung zuläßt. Die beiden Planetenräder 11 und 12 jedes Planetenradpaares 10 sind in Richtung ihrer Achsen 13 und 14 und damit auch in Richtung bzw. parallel zu der Erstreckung der Führungsachse 15 verschiebbar. Die Verschiebbarkeit ist durch einen Doppelpfeil 16 angedeutet. Damit ist erkennbar, daß jedes Planetenradpaar 10 an verschiedenen Stellen entsprechend dem Doppelpfeil 16 mit dem jeweiligen Oberflächenbereich des Sonnenrades 4 und des Gehäuses 5 zusammenarbeiten kann. Die Anlage an diesen beiden Oberflächen sowie gegeneinander ist flächig und unter Reibschluß. Man kann sich daher ohne weiteres vorstellen, daß das Planetengetriebe auch lastfrei schaltbar ausgebildet sein könnte, wenn beispielsweise eine Kupplung, die im Antriebsstrang vorgesehen ist, ausgerückt wird. In dieser Zeit der Ausrückung der Kupplung kann die Gesamtheit der Planetenradpaare 10 gemäß Doppelpfeil 16 an eine andere Stelle verstellt werden, woraus sich ein anderes Übersetzungsverhältnis ergibt. Nach dem Einrücken der Kupplung arbeitet dann das Planetengetriebe 1 mit dieser anderen Übersetzungsstufe. Für diese besonders einfache Ausbildung ist es nicht erforderlich, Planetenradpaare 10 aus jeweils zwei Planetenrädern 11 und 12 in der gezeichneten Weise vorzusehen. Es genügt hier, die kegelförmige Ausbildung des Sonnenrades 3 und des Gehäuses 5 in Verbindung mit beispielsweise drei einzelnen über den Umfang verteilt angeordneten Planetenrädern statt der Planetenradpaare 10. Dies wird aber anhand eines Beispiels noch weiter unten verdeutlicht. Wenn man ein Planetengetriebe 1 mit unter Last schaltbarer, d. h. variabler Übersetzung haben möchte, müssen Planetenradpaare 10 aus zwei Planetenrädern 11 und 12 verwendet werden.

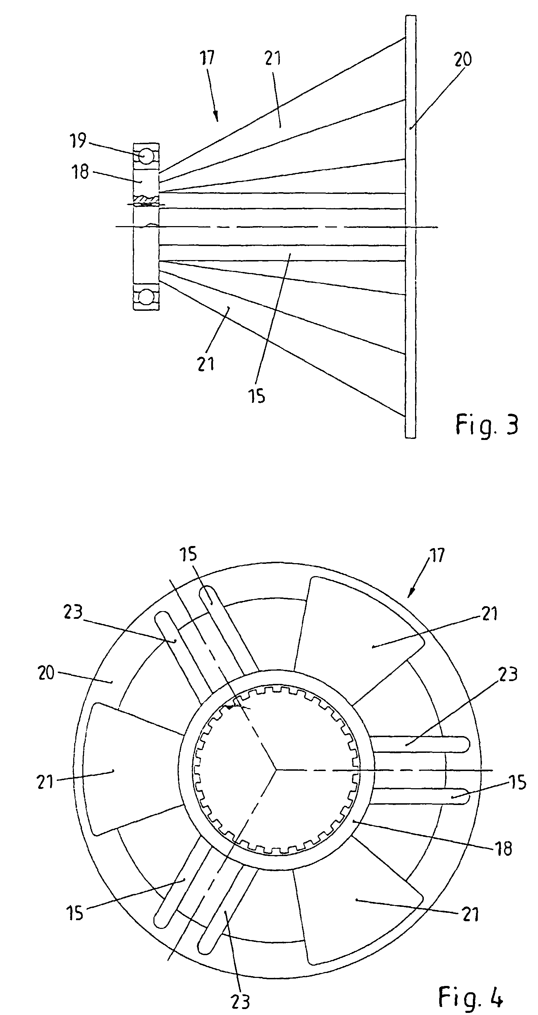

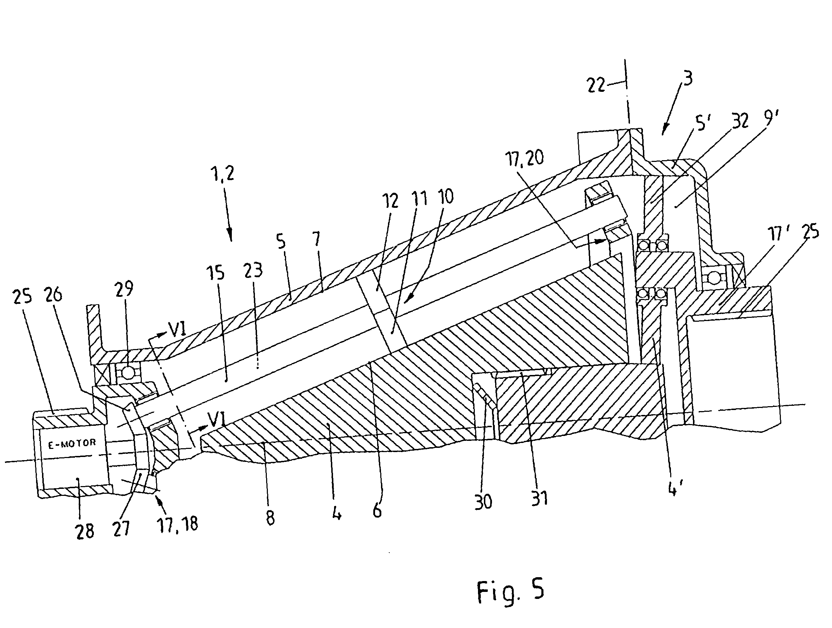

In Fig. 1 ist nur teilweise sichtbar ein Planetenradträger 17 angedeutet, wie er insgesamt in den Fig. 3 und 4 dargestellt ist. Der Planetenradträger 17 besitzt einen Ring 18, der in einem Lager 19 drehbar gelagert ist. Der Planetenradträger 17 besitzt weiterhin einen Ring 20, der aus Übersichtlichkeitsgründen in Fig. 1 nicht dargestellt ist. Der Ring 20 umgibt das Sonnenrad 4 etwa an seiner breitesten Stelle. Der Ring 18 ist mit dem Ring 20 über Verbindungsstreben 21 verbunden. Je eine Verbindungsstrebe 21 ist über den Umfang des Sonnenrades verteilt angeordnet, und zwar in der Lücke im Ringraum 9 zwischen zwei benachbarten Planetenradpaaren 10. Der Planetenradträger 17 dient zum Lagern und Halten der Planetenradpaare 10 sowie zum Lagern und Halten der Führungsachse 15 bzw. noch weiterer Achsen, wie sie nachfolgend noch beschrieben werden. Der Planetenradträger 17 dient auch zur Einleitung des Drehmomentes in das Planetengetriebe 1, ist also auf irgendeine Weise mit einer Eingangswelle verbunden.

Was bisher für die Eingangsstufe 2 beschrieben wurde, gilt sinngemäß für die Ausgangsstufe 3 ebenfalls. Grundsätzlich ist bei dem Ausführungsbeispiel der Fig. 1 die Ausgangsstufe 3 ähnlich bzw. entsprechend wie die Eingangsstufe 2 aufgebaut und ausgebildet. Die einzelnen Elemente sind symmetrisch zu einer Längsmittelebene 22 angeordnet. Lediglich die Planetenradpaare der Ausgangsstute 3 arbeiten in der Regel an einer anderen Stelle des zugehörigen Sonnenrades bzw. Gehäuses. Die Eingangsstufe 2 besitzt zu jedem Zeitpunkt ein erstes Übersetzungsverhältnis. Die Ausgangsstufe 3 besitzt zu jedem Zeitpunkt ein zweites Übersetzungsverhältnis. Die Gesamtübersetzung des Planetengetriebes 1 aus einer solchen Eingangsstufe 2 und einer solchen Ausgangsstufe 3 ergibt sich durch Multiplikation der beiden Übersetzungsverhältnisse. Es sei bereits hier darauf hingewiesen, daß die Erfindung nicht unbedingt doppelt, also einmal im Bereich der Eingangsstufe 2 und einmal im Bereich der Ausgangsstufe 3 angewendet werden muß. Es genügt beispielsweise, die Erfindung im Bereich der Eingangsstufe 2 mit variabler, unter Last schaltbarer Übersetzung auszubilden und beispielsweise auch auf seiten der Ausgangsstufe 3 ein festes Übersetzungsverhältnis vorzusehen, wie dies beispielsweise bei der Ausführung gemäß Fig. 5 der Fall ist.

Es versteht sich, daß auch im Bereich der Ausgangsstufe neben den anderen Elementen ein Planetenradträger vorgesehen ist, der in geeigneter Weise mit einer Ausgangswelle getrieblich in Verbindung steht.

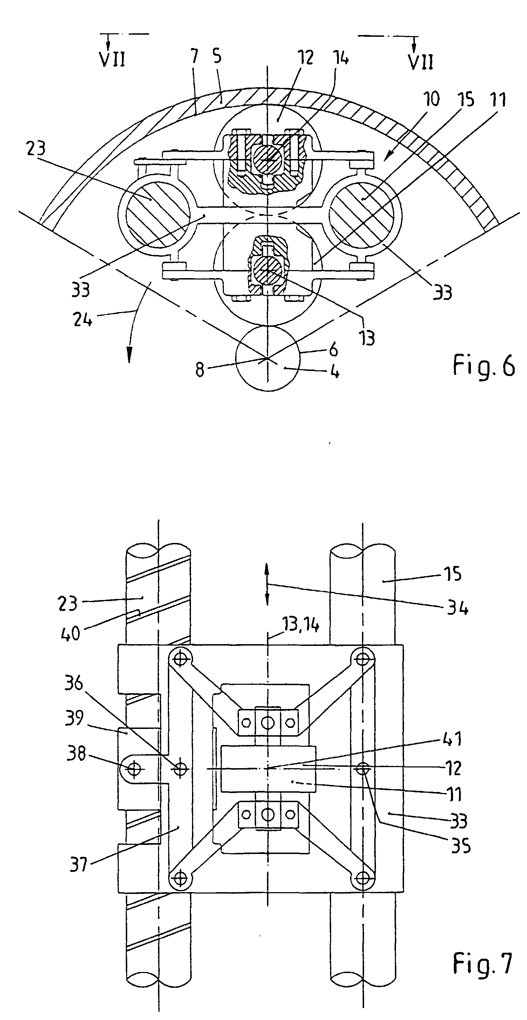

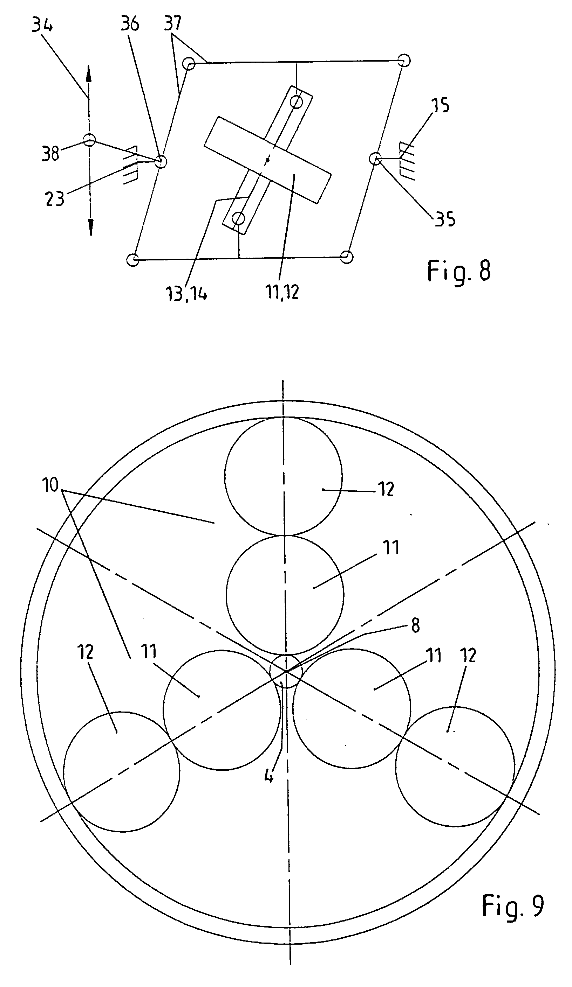

Die Fig. 3 und 4 zeigen einen Planetenradträger 17 in Einzeldarstellung. Die wesentlichen Elemente sind die beiden Ringe 18 und 20, die über die Verbindungsstreben 21 aneinander abgestützt sind, so daß der Planetenradträger 17 gleichsam einen festen Rahmen oder Käfig bildet. Dieser Planetenradträger 17 trägt bzw. hält auch die bereits beschriebenen Führungsachsen 15, wobei jede dieser Führungsachsen 15 je einen Planetenradpaar 10 zugeordnet ist. Parallel zu jeder Führungsachse 15 ist eine Verstellachse 23 vorgesehen. Die Relativlage zwischen den parallel zueinander angeordneten Führungsachsen 15 und Verstellachsen 23 geht auch aus den Fig. 6 und 7 hervor, wobei die Drehrichtung des nicht dargestellten Antriebsmotors vor dem Planetengetriebe durch einen Pfeil 24 in Fig. 6 angegeben ist. Für diese Drehrichtung gemäß Pfeil 24 ist die Relativanordnung der Führungsachse 15 und der Verstellachse 23 in einer stabilen Lage dargestellt. Wenn der Antriebsmotor, wie es allgemein üblich ist, rechtsdrehend ausgebildet ist, muß die relative Lage zwischen Führungsachse 15 und Verstellachse 23 umgekehrt werden, also genau gegensätzlich gewählt werden, wie es in der Zeichnung dargestellt ist, um eine stabile Verstellung der Übersetzung unter Last zu erreichen.

Fig. 5 zeigt weitere Einzelheiten eines Übersetzungsgetriebes 1 mit einer Eingangsatufe 2 mit variabler Übersetzung und einer Ausgangastufe 3 mit fester Übersetzung. Im Bereich der Eingangsstufe 2 sind die einzelnen Elemente so angeordnet und ausgebildet, wie dies anhand der Fig. 1-4 beschrieben wurde. Es ist auch erkennbar, wie der Planetenradträger 17 ausgebildet ist. Über eine an ihm vorgesehene Verzahnung 25 wird das Eingangsdrehmoment von dem Antriebsmotor in das Planetengetriebe 1 übertragen. Die Verstellachsen 23 sind in dem Planetenradträger 17 mit Hilfe von Lagern drehbar gelagert. An einen Ende jeder Verstellachse 23 ist ein Kegelrad 26 vorgesehen, welches als Zahnrad ausgebildet ist. Mit den drei Kegelrädern 26 kämmt ein Zahnrad 27, welches von einem Elektromotor 28 angetrieben wird, wenn das Übersetzungsverhältnis geändert werden soll. Der Planetenradträger 17 seinerseits ist über ein Lager 29 drehbar in dem Gehäuse 5 gelagert.

Das Sonnenrad 4 in Kegelform bzw. Kegelstumpfform ist hier freifliegend vorgesehen und durch die drei inneren Planetenräder 11 gelagert. Die Ausgangastufe 3 besitzt ein relativ kurz und mit vergleichsweise kleinem Durchmesser ausgebildetes Sonnenrad 4', dessen Mantellinie bzw. äußere Oberfläche ebenfalls leicht konisch ausgebildet ist. Die beiden Sonnenräder 4 und 4' sind über eine Druckquelle 30, hier in Form einer Tellerfeder axial gegeneinander abgestützt und über eine ineinandergreifende Verzahnung 31 drehtest miteinander verbunden. Man erkennt, daß der Planetenradträger 17' der Ausgangsstufe 3 vergleichsweise einfacher ausgebildet ist als der Planetenradträger 17 der Eingangsstufe 2. Auch ist erkennbar, daß jedes Planetenradpaar 10 auf der Seite der Eingangsstufe 2 durch ein einzelnes Planetenrad 32 ersetzt ist, welches den Ringraum 9' komplett ausfüllt, wobei also der Durchmesser des Planetenrades 32 der Breite des Ringraums 9' zwischen der äußeren Oberfläche des Sonnenrades 4' und der inneren Oberfläche des Gehäuses 5' entspricht. Es ist auch erkennbar, daß das Planetenrad 32 bzw. die drei ebenfalls über den Umfang verteilt angeordneten Planetenräder 32 in Richtung ihrer Achsen nicht verstellbar angeordnet sind. Die Ausgangsstufe 3 besitzt deshalb keine variable, sondern eine fest vorgesehene Übersetzung. Auch die Planetenräder 32 sind als Friktionsräder ausgebildet und stehen mit ihren Kontaktflächen an dein Sonnenrad 4' und an dem Gehäuse 5' unter Reibschluß. Aus Fig. 5 ist die kraftmäßige Abstützung der Elemente der Eingangsstufe 2 und der Ausgangsstufe 3 erkennbar. Die Elemente sind gegensinnig gegeneinander angestellt, und die Kraftquelle 30 sorgt sowohl für die notwenndige Anpressung der Planetenräder 11 und 12 der Planetenradpaare 10 als auch der Planetenräder 32 an den entsprechenden Gegentlächen. Man erkennt auch, daß von diesem Reibschluß initiierte Kräfte nicht über irgendwelche Lager oder Achsen geleitet werden, so daß das Planetengetriebe 1 auch in dieser Hinsicht sehr vorteilhaft ausgebildet ist. Der Planetenradträger 17' der Ausgangsstufe 3 weist eine Verzahnung 25' auf, die getrieblich mit einer Ausgangswelle verbunden ist.

Aus den Fig. 6 und 7 geht hervor, wie im einzelnen ein Planetenradpaar 10 aus einem inneren Planetenrad 11 und einem äußeren Planetenrad 12 in Richtung ihrer Achsen 13 und 14 und damit parallel zu den Mantellinien 6 und 7 verstellt werden. Wie ersichtlich zeigt Fig. 6 eine Draufsicht auf die kleine Stirnseite des Sonnenrades 4, an dem das innere Planetenrad 11 in Reibkontakt anliegt. An dem inneren Planetenrad 11 stützt sich unter Reibkontakt das äußere Planetenrad 12 ab, welches seinerseits an der inneren Oberfläche des Gehäuses 5 in Reibkontakt steht. Es versteht sich, daß sich das Planetenrad 11 gegensinnig zu dem Planetenrad 12 dreht. Wie insbesondere aus Fig. 7 erkennbar ist, ist auf der Führungsachse 15 und der Verstellachse 23 ein Käfig 33 in einer Richtung parallel zu den Achsen 13 und 14, also gemäß Doppelpfeil 34 gleitend geführt. Der Käfig 33 besitzt zwei Drehachsen 35 und 36, um die ein Lenkgestänge 37 aus vier Hebeln, wie dargestellt, schwenkbar angeordnet ist. Die einzelnen Hebel des Lenkgestänges 37 stehen über Gelenke miteinander in Verbindung. Der um die Drehachse 36 schwenkbare Hebel des Lenkgestänges 37 ist über ein Gelenk 38 an einer Verstellmutter 39 gekoppelt, die mit entsprechendem Innengewinde auf einem Außengewinde 40 auf der Verstellachse 23 läuft. Das Lenkgestänge 37 besteht gleichsam aus symmetrisch angeordneten Elementen oberhalb und unterhalb der durch die Führungsachse 15 und Verstellachse 23 festgelegten Ebene. Insgesamt besitzt das Lenkgestänge 37 somit mindestens acht Hebel. An diesen vier unteren Hebeln ist das innere Planetenrad 11 mit entsprechender Lagerung frei drehbar aufgehängt. An den vier oberen Hebeln (Fig. 6) des Lenkgestänges 37 ist das äußere Planetenrad 12 mit entsprechender Lagerung frei drehbar aufgehängt. Die Planetenräder 11 und 12 sind damit zugleich kippsicher gehalten. Wenn nun die Übersetzung des Planetengetriebes 1 bzw. der Eingangsstufe 2 geändert werden soll, wird der Elektromotor 28 in Tätigkeit gesetzt, so daß er die drei Verstellachsen 23 gemeinsam um den gleichen Betrag verdreht. Demzufolge werden die drei Verstellmuttern 39 nach der einen oder anderen Richtung auf den Verstellachsen 23 wandern und dabei den über das Gelenk 38 angelenkten Hebel des Lenkgestänges 37 um die Drehachse 36 verschwenken, wie dies prinzipiell in Fig. 8 angedeutet ist. Hieraus wird auch erkennbar, daß die Achsen 13 und 14 der Planetenräder 11 und 12 in eine Schräglage zu der Mantellinie 6 des Sonnenrades 4 und der Mantellinie 7 des Gehäuses 5 geraten und dabei auf dem Umfang dieser beiden Elemente abrollen können. Sie bewegen sich damit in eine andere Stellung, so daß eine andere Übersetzung eingestellt wird. Diese Verstellbewegung wird durch Stillsetzen des Elektromotors 28 beendet. Je nach der Drehrichtung des Elektromotors 28 erfolgt eine Änderung und Verstellung der Planetenradpaare in Richtung auf den Fuß des kegelförmigen Sonnenrades 4, also in Richtung auf die Übertragung eines erhöhten Drehmomentes bei verkleinerter Ausgangsdrehzahl oder in umgekehrter Richtung auf die Spitze des kegelförmigen Sonnenrades 4 zu, wobei die Drehzahl erhöht und das ausgangsseitig übertragene Drehmoment erniedrigt wird.

Durch das Wandern der Verstellmuttern 39 auf den Verstellachsen 23 bei Antrieb des Elektromotors 28 werden die Planetenradpaare 10 aus den Planetenrädern 11 und 12 jeweils um eine Schwenkachse 41 verschwenkt. Die Verschwenkachse 41 steht senkrecht auf der Mantellinie 6 des Sonnenrades 4. Da die Verstellung bzw. Veränderung der Übersetzung nur dann erfolgen kann, wenn das Planetengetriebe 1 auch bewegt wird, rollen die Planetenradpaare 10 schräg zu der Mantellinie 6 des Sonnenrades 4 auf der Oberfläche des Sonnenrades 4 ab und begeben sich damit an einen anderen Ort, dem ein anderer Durchmesser des Sonnenrades 4 und damit eine andere Übersetzung zugeordnet ist.

Fig. 9 zeigt die Anordnung der drei Planetenradpaare 10 aus den inneren Planetenrädern 11 und den äußeren Planetenrädern 12, ähnlich wie dies bereits in Fig. 2 dargestellt worden ist. Fig. 9 zeigt bzw. verdeutlicht, daß das dem Eingang des Planetengetriebes 1 zugekehrte Ende des Sonnenrades 4 einen relativ kleinen Durchmesser bekommen kann, der lediglich dadurch begrenzt wird, daß sich die inneren Planetenräder 11 nicht gegenseitig berühren dürfen. Die Flächenpressung läßt es zu, daß das Sonnenrad 4 an dieser Stelle der Mittelachse 8 einen solch kleinen Durchmesser besitzt. Daraus wird auch erkennbar, daß das nutzbare bzw. verstellbare Übersetzungsverhältnis sehr groß wird.

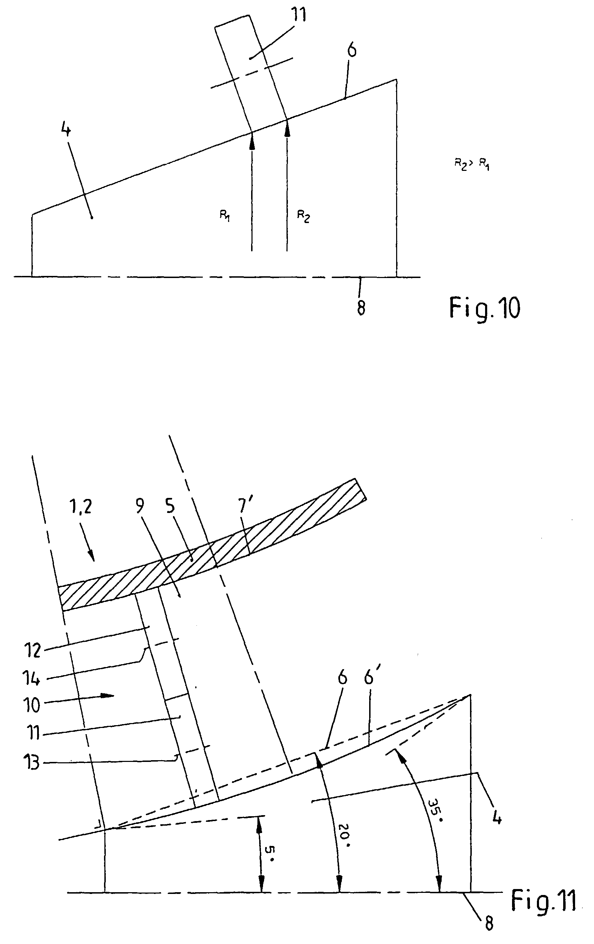

Dennoch arbeitet auch das vorliegende Planetengetriebe 1 nicht verlustfrei, wie anhand von Fig. 10 angedeutet werden soll. Es ist dort schematisch das Sonnenrad 4 und das innere Planetenrad 11 dargestellt. Man erkennt, daß der Reibschluß zwischen dem Umfang des Planetenrades 11 und der Mantellinie 6 des Sonnenrades 4 eine gewisse Fläche bzw. Strecke einschließt, innerhalb der die beiden unterschiedlichen Durchmesser bzw. Radien R₁ und R₂ wirksam werden. Da das Planetenrad 11 auf zwei unterschiedlichen Durchmessern nicht gleichzeitig gleitfrei abrollen kann, wird erkennbar, daß hier Gleitreibung unvermeidlich ist. Diese Gleitreibung vermindert den Wirkungsgrad des Planetengetriebes. Dieser Wirkungsgradverminderung kann dadurch entgegengewirkt werden, daß die Umfangsfläche des Planetenrades 11 leicht ballig ausgeführt wird, so daß die Streckenberührung reduziert wird und damit der Gleitreibungsanteil vermindert wird.

Anhand von Fig. 11 soll verdeutlicht werden, daß die Mantellinie 6 des Sonnenrades 4, wie in den vorangehenden Beispielen, nicht unbedingt gerade, sondern auch leicht gekrümmt ausgebildet werden kann. Zum Vergleich ist in gestrichelter Linie die gerade Mantellinie 6 und in durchgezogener Linie eine gekrümmte Mantellinie 6' angedeutet. Entsprechend muß auch das Gehäuse 5 eine ebenso gekrümmte Mantellinie 7' aufweisen. Auch hier ist im Ringraum 9 ein Planetenradpaar 10 aus einem inneren Planetenrad 11 und einem äußeren Planetenrad 12 angedeutet. Man erkennt, daß sich der Winkel des Verlaufs der Mantellinie 6' zu der Mittelachse 8 über die Länge des Sonnenrades 4 ändert. Dieser Winkel ist hier beispielhaft zwischen 5° und 35° angegeben, während der Winkel der geraden Mantellinie 6 konstant 20° beträgt. Bei einem Planetengetriebe mit gerade Mantellinie 6 des Sonnenrades 4 und entsprechender Ausbildung des Gehäuses 5 beträgt der Wirkungsgrad im Bereich des Fußes des kegelförmigen Sonnenrades 4 etwa 98 %, während er im Bereich der Spitze bei hohen Drehzahlen bis etwa 75 % sinken kann. Durch die Ausbildung des Sonnenrades 4 mit gekrümmter Mantellinie 6 vermindert sich zwar der Wirkungsgrad im Bereich des Fußes des Sonnenrades 4 von 98 auf etwa 95 %. Umgekehrt steigt aber der Wirkungsgrad im Bereich der Spitze des Sonnenrades dabei von etwa 75 % auf etwa 88 %. Dies ist vorteilhaft, weil das Planetengetriebe 1 dann insgesamt einen hohen Wirkungsgrad erhält.

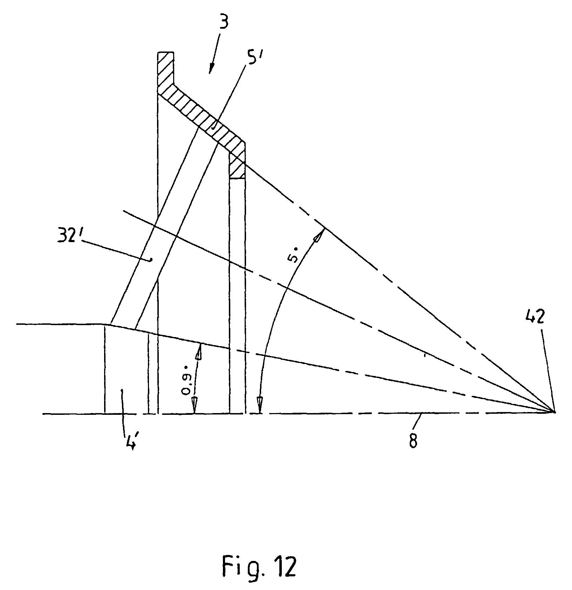

Fig. 12 verdeutlicht schematisch eine vorteilhafte Möglichkeit zur Ausbildung einer Ausgangsstufe 3 mit fester Übersetzung. Das Sonnenrad 4' ist konisch ausgebildet, ebenso das Gehäuse 5'. Die Konizität dieser beiden Teile ist jedoch so aufeinander abgestimmt, daß sich ein gemeinsamer Schnittpunkt 42 auf der Mittelachse 8 ergibt. Zwischen das Sonnenrad 4' und das Gehäuse 5' ist ein Planetenrad 32' eingeschaltet, welches als kegelförmiges Friktionsrad ausgebildet ist und dessen Kegellinien ebenfalls in dem gemeinsamen Schnittpunkt 42 zusammenlaufen. Diese Ausgangsstufe 3 arbeitet nahezu ohne Verluste, so daß der Wirkungsgrad in der Größenordnung von 99 % liegt. Wird eine solche Ausgangsstufe 3 gemäß Fig. 12 mit einer Eingangsstufe 2 gemäß Fig. 11 kombiniert, so besitzt das damit entstehende Planetengetriebe 1 über seinen gesamten Verstellbereich einen Wirkungsgrad, der im Bereich zwischen 95 % und 98 % liegt.

| **BEZUGSZEICHENLISTE** | | | |
|---|---|---|---|
| 1 | Planetengetriebe | 11 | Planetenrad |
| 2 | Eingangsstufe | 12 | Planetenrad |
| 3 | Ausgangsstufe | 13 | Achse |
| 4 | Sonnenrad | 14 | Achse |
| 5 | Gehäuse | 15 | Führungsachse |
| 6 | Mantellinie | 16 | Doppelpfeil |
| 7 | Mantellinie | 17 | Planetenradträger |
| 8 | Mittelachse | 18 | Ring |
| 9 | Ringraum | 19 | Lager |
| 10 | Planetenradpaar | 20 | Ring |
| 21 | Verbindungsstrebe | 31 | Verzahnung |
| 22 | Längsmittelebene | 32 | Planetenrad |
| 23 | Verstellachse | 33 | Käfig |
| 24 | Pfeil | 34 | Doppelpfeil |
| 25 | Verzahnung | 35 | Drehachse |
| 26 | Kegelrad | 36 | Drehachse |
| 27 | Zahnrad | 37 | Lenkgestänge |
| 28 | Elektromotor | 38 | Gelenk |
| 29 | Lager | 39 | Verstellmutter |
| 30 | Druckquelle | 40 | Außengewinde |
| 41 | Schwenkachse | | |
| 42 | Schnittpunkt | | |

## Patentansprüche

1. Planetengetriebe (1) mit einem Gehäuse (5), einem Sonnenrad (4) und mindestens zwei Planetenrädern (11), die auf einem Planetenradträger (17) frei drehbar gelagert sind und deren Achsen (13) in radialer Richtung zu einer gemeinsamen Mittelachse (8) des Planetengetriebes (1) fluchtend angeordnet sind, wobei das Gehäuse (5) und das Sonnenrad (4) entlang der Mittelachse (8) unterschiedliche Durchmesser und somit kegelförmige Mantellinien (6, 7) aufweisen, sämtliche Planetenräder (11) zur Änderung der Übersetzung unter Last gemeinsam in Richtung ihrer Achsen (13) verschiebbar sind und das Gehäuse (5), die Planetenräder (11) und das Sonnenrad (4) in Richtung der Mittelachse (8) gegeneinander angepreßt angeordnet sind und sich unter Reibschluß aneinander abwälzen, **dadurch gekennzeichnet**, daß als Planetenräder Planetenradpaare (10) aus einem inneren Planetenrad (11) und einem äußeren Planetenrad (12) mit ihren Achsen (13, 14) vorgesehen sind, daß die Achsen (13, 14) der beiden Planetenräder (11, 12) jedes Planetenradpaares (10) in radialer Richtung zu der Mittelachse (8) des Planetengetriebes (1) fluchtend angeordnet sind, und daß die beiden Planetenräder (11, 12) jedes Planetenradpaares (10) um eine sich radial zu der Mantellinie (6) des Sonnenrades (4) erstreckende Schwenkachse (41) verschwenkbar angeordnet und somit schräg zu den Mantellinien (7, 6) des Gehäuses (5) und des Sonnenrades (4) verstellbar sind.

2. Planetengetriebe nach Anspruch 1, **dadurch gekennzeichnet**, daß die beiden Planetenräder (11, 12) jedes Planetenradpaares (10) frei drehbar an einem Käfig (33) gelagert sind, und daß der Käfig (33) in Richtung der Mantellinien (7, 6) des Gehäuses (5) und des Sonnenrades (4) verschiebbar geführt ist.

3. Planetengetriebe nach Anspruch 2, **dadurch gekennzeichnet**, daß die beiden Planetenräder (11, 12) jedes Planetenradpaares (10) relativ zu dein Käfig (33) um die sich radial zu der Mantellinie (6) des Sonnenrades (4) erstreckende Schwenkachse (41) über ein Lenkgestänge (37) verschwenkbar angeordnet sind.

4. Planetengetriebe nach Anspruch 1 bis 3, **dadurch gekennzeich**net, daß der die beiden Planetenräder (11, 12) jedes Planetenradpaares (10) aufnehmende Käfig (33) auf mindestens einer Führungsachse (15) in Richtung der Mantellinie (6) des Sonnenrades (4) geführt ist und die Planetenräder (11, 12) aller Planetenradpaare (10) über einen willkürlich steuerbaren Antrieb (28, 27, 26, 23, 39) verschiebbar sind.

5. Planetengetriebe nach Anspruch 1 bis 4, **dadurch gekennzeich**net, daß die kegelförmigen Mantellinien (6, 7) gerade oder gekrümmt verlaufend ausgebildet sind.

6. Planetengetriebe nach Anspruch 1 bis 5, **dadurch gekennzeich**net, daß der die beiden Planetenräder (11, 12) jedes Planetenradpaares (10) aufnehmende Käfig (33) auf einer Führungsachse (15) und einer dazu parallel angeordneten Verstellachse (23) in Richtung der Mantellinie (6) des Sonnenrades (4) geführt ist, daß die Verstellachse (23) ein Außengewinde (40) aufweist, auf dem eine Verstellmutter (39) angeordnet ist, die mit dem Lenkgestänge (37) in Verbindung steht, und daß für die Verstellung der Planetenradpaare (10) ein Elektromotor (28) für den Drehantrieb der Verstellachsen (23) vorgesehen ist.

7. Planetengetriebe nach einem der Ansprüche 1 bis 6, **dadurch gekennzeichnet**, daß drei Planetenradpaare (10) vorgesehen sind und das Sonnenrad (4) freifliegend an den drei ihm zugekehrten Planetenrädern (11) gelagert ist.

8. Planetengetriebe nach einem der Ansprüche 1 bis 7, **dadurch gekennzeichnet**, daß das Planetengetriebe (1) eine aus Gehäuse (5), Planetenradpaaren (10) und Sonnenrad (4) gebildete Eingangsstufe (2) mit variabler Übersetzung und eine Ausgangsstufe (3) mit fester Übersetzung aufweist.

9. Planetengetriebe nach Anspruch 8, **dadurch gekennzeichnet**, daß die Ausgangsstufe (3) ein Sonnenrad (4') mit kegelförmiger Umfangsfläche, ein kegelförmiges Gehäuse (5') und mindestens zwei Planetenräder (32) aufweist, die auf einem Planetenradträger (17') mit schräg zur Mittelachse (8) des Planetengetriebes (1) angeordneten Achsen drehbar angeordnet sind.

10. Planetengetriebe nach Anspruch 8 und 9, **dadurch gekennzeichnet**, daß für die axiale Anpressung der Elemente eine Druckquelle (30) vorgesehen ist, die bei gegensinniger Anordnung der Gehäuse (5, 5') die Sonnenräder (4, 4') der Eingangsstufe (2) und der Ausgangsstufe (3) auseinanderdrückt.
